(19) Europäisches Patentamt

European Patent Office

Office européen des brevets

(11) **EP 1 061 466 A2**

(12) **EUROPEAN PATENT APPLICATION**

(43) Date of publication:
20.12.2000 Bulletin 2000/51

(51) Int. Cl.⁷: **G06K 7/10**

(21) Application number: **00112262.1**

(22) Date of filing: **07.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.06.1999 JP 16338899
10.06.1999 JP 16338999
12.08.1999 JP 22850899
24.08.1999 JP 23751899**

(71) Applicant: **KONICA CORPORATION
Tokyo (JP)**

(72) Inventor:
**Kurogama, Tatsuji,
c/o Konica Corporation
Hachioji-shi, Tokyo (JP)**

(74) Representative:
**Henkel, Feiler, Hänzel
Möhlstrasse 37
81675 München (DE)**

(54) **Optical pickup device and optical type surface displacement detecting apparatus**

(57) An optical pick-up apparatus comprises a light source to emit light; an optical element to irradiate a surface of an detection object with the light emitted from the light source, wherein the surface of the detection object diffusely reflects the light at reflection angles and the reflection angles are changed due to a concave, a convex or a hole provided on the surface of the detection object; a condenser lens to condense the light diffusely reflected from the surface of the detection object; and a light receiving element having a light receiving surface and to receive the light condensed by the condenser lens at a light receiving position on the light receiving surface, wherein the light receiving position displaces on the light receiving surface due to the concave, the convex or the hole provided on the surface of the detection object; wherein the optical pick-up apparatus detects the concave, the convex or the hole provided on the surface of the detection object from the light receiving position on the light receiving surface.

FIG. 1

**EP 1 061 466 A2**

## Description

## BACKGROUND OF THE INVENITON

This invention relates to an optical type surface displacement detecting apparatus for detecting a concave, a convex or a hole of a detection object and to an optical pickup device.

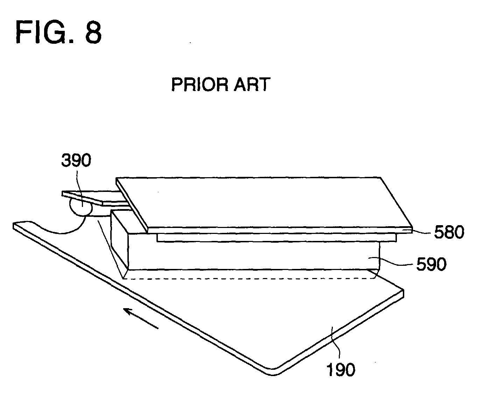

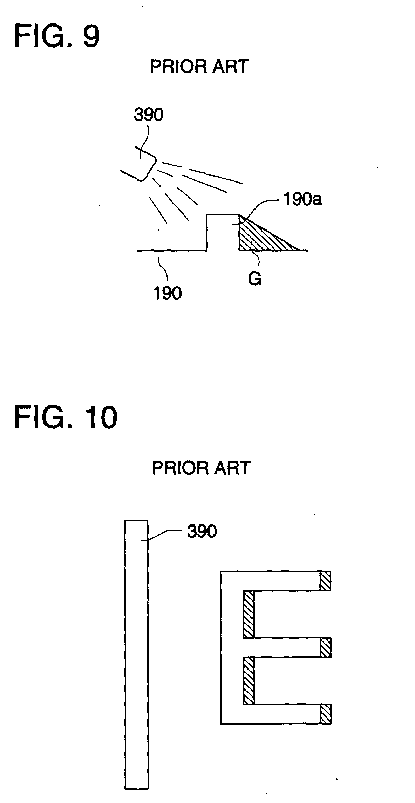

It is shown in Fig. 8 the structure of an example of a conventional surface displacement detecting apparatus for detecting ruggedness of a detection object. In the drawing, a broad light is applied from the line light source 390 to the card-shaped detection object 190 having ruggedness which is transported in the direction of the arrow mark. When a light is applied to the detection object 190, as shown in Fig. 9, the shadow G owing to the projection of the convex portion 190a is produced on the detection object 190. This shadow G is read by the image sensor (a line sensor) 580 through the condenser lens (rod lens array) 590.

However, regarding the surface displacement detecting apparatus having the above-described structure, there is a problem that no shadow is produced if the direction of the line light source 390 and the direction of extension of the projection of the convex portion agrees with each other. That is, as shown in Fig. 10, in the case where a convex portion having the shape of character "E" is formed on the detection object 190, and the line light source 190 is put in the positional relation as shown in the drawing, there is a problem that the area in which the shadow G of the projection portion is not produced is long, to make it difficult to recognize the shape of the character.

In the surface displacement detecting apparatus having the structure shown in Fig. 8, the line light source 390 is arranged in such a manner as to cross the transporting direction of the card 190 obliquely, it occurs a phenomenon such that the card 190 is transported obliquely which makes it difficult to recognize the character having some shape.

## SUMMARY OF THE INVENTION

This invention has been made in view of the above-described problems, and it is an object of the invention to provide a surface displacement detecting apparatus which is of low cost, has a simple structure, and makes the reading precision for a convex, a concave or a hole higher.

In the following, this invention to solve the above-described problems will be shown:

(1) An optical pickup device comprising a light source, an optical element to irradiate the detection object with light emitted from said light source, a condenser lens collecting the reflected light which has been irradiated by the optical element and diffusely reflected by the surface of said detection object, and a light receiving element for receiving the light collected by said condenser lens, wherein said optical pickup device detects the convex, the concave or the hole on said detection object by the light receiving position on said light receiving element, and wherein the optical pick-up apparatus comprises a plurality of light receiving elements aligned in a line as the light receiving element or the light receiving element is split into a plurality of light receiving elements.

(2) An optical type surface displacement detecting apparatus for optically detecting a concave, a convex or a hole provided on a surface of a detection object, comprising:

an optical pick-up apparatus comprising;

a light source to emit light,
an optical element to irradiate a surface of an detection object with the light emitted from the light source, wherein the surface of the detection object diffusely reflects the light at reflection angles and the reflection angles are changed due to the concave, the convex or the hole provided on the surface of the detection object,
a condenser lens to condense the light diffusely reflected from the surface of the detection object, and
a light receiving element having a light receiving surface and to receive the light condensed by the condenser lens at a receiving position on the light receiving surface, wherein the light receiving position displaces on the light receiving surface due to the concave, the convex or the hole provided on the surface of the detection object; and

a scanning section to relatively shift the light to the detection object;
wherein the optical type surface displacement detecting apparatus detects the concave, the convex or the hole provided on the surface of the detection object from the light receiving position of the light receiving element, and
wherein the optical pick-up apparatus comprises a plurality of light receiving elements aligned in a line as the light receiving element or the light receiving element is split into a plurality of light receiving elements.

Further, the above object can be attained by the following preferable structures.

(3) In a card embossment reading apparatus that a card provided with an embossment is irradiated with light emitted from a light source, the light reflected from the surface of the card is introduced a split light receiving element and the embossment on the card is read by using signals from the light receiving elements, the card embossment reading apparatus is characterized in that the size of the light on the surface of the card is not larger than the width of the embossment and the embossment is read from the displacement in a direction of the height between a region provided with the embossment and a region not provided with the embossment.

(4) In a card reading apparatus in which light emitted from a light source is irradiated to a card having a convex or a concave, the light reflected from the surface of the card is introduced to a split light receiving element and the convex or the concave is read by using signals from the light receiving element, the card reading apparatus is characterized in that the size of the light on the surface of the card is not larger than the width of the convex or the concave and the convex or the concave is read from a displacement in a direction of the height between a region provided with the convex or the concave and a region not provided with the convex or the concave.

(5) In an optical type surface displacement detecting apparatus in which a surface of a detection object is irradiated with line-shaped light formed from light emitted from a light source by a line-shaped light producing means, the light reflected from the surface of the detection object is introduced to a light receiving element split into plural pieces in a direction along the line of the line-shape light by a light receiving section so as to detect a distribution of the displacement on the surface of the detection object, the optical type surface displacement detecting apparatus is characterized in that an optical element having a direction in light collecting action is used as the line-shaped light producing means.

(6) In the optical type surface displacement detecting apparatus of (5), a semiconductor laser diode is used as the light source and the semiconductor laser diode is arranged such that a direction of a long axis of the ellipse-shaped far-field pattern of the semiconductor laser diode is conformed with that of the line of the line-shaped light.

(7) In the optical type surface displacement detecting apparatus of (5), the optical element is a array-shaped photo-diode split into m x n, where m and n is integer not smaller than 1.

(8) In the optical type surface displacement detecting apparatus of (5), there is provided a scanning means to move relatively the line-shaped light and the detection object in direction crossing the direction of the line of the line-shaped light.

(9) A pattern recognizing apparatus is characterized in that there is provided a pattern recognizing means for recognizing a pattern on the surface of the detection object from the information of the displacement distribution on the surface of the detection object detected by the optical type surface displacement detecting apparatus of (5).

(10) A reading apparatus is characterized by comprising a means for reading the fourth information other than magnetic information, information recorded in an IC chip and information by an embossment.

(11) A reading apparatus is characterized by comprising a means for reading at least one of magnetic information, information recorded in an IC chip and information by an embossment and a means for reading the fourth information other than magnetic information, information recorded in an IC chip and information by an embossment.

(12) A reading apparatus is characterized by comprising a means for reading at least one of magnetic information and IC information; a means for reading information by an embossment; and a means for reading the fourth information other than magnetic information, information recorded in an IC chip and information by an embossment.

(13) In the reading apparatus of one of (10) to (12), the fourth information is information readable optically.

(14) In the reading apparatus of one of (13), the information readable optically is an optical mark whose reflection ratio or transmission ratio for irradiated light becomes a predetermined value.

(15) In the reading apparatus of one of (13), the information readable optically is an optical mark whose reflection ratio or transmission ratio for irradiated light in a specific wavelength region is different from that for irradiated light in the other wavelength region.

(16) In the reading apparatus of one of (10) to (12), the fourth information is information using a polarizing direction of reflected light or transmitted light accompanying a specific rotation for a polarizing direction of incident light.

(17) In the reading apparatus of one of (16), the information is rotation information of the polarizing direction by photo magnetic effect for the irradiated light.

(18) In the reading apparatus of one of (16), the information is rotation information of the polarizing direction caused by the case that the irradiated light passes through a double refracting material.

(19) In the reading apparatus of one of (10) to (12), the fourth information is a mark whose reflection ratio or transmission ratio is a predetermined value for a polarizing direction of incident light.

(20) In the reading apparatus of one of (19), the information is a mark provided so as to have a predetermined angle for a polarizing direction of incident light to a polarizing filter to allow a specific polarizing light component to pass through.

(21) In the reading apparatus of one of (10) to (12), the fourth information is an optical mark constructed by a material to emit light by irradiated light.

(22) In the reading apparatus of one of (10) to (12), the fourth information is an optical mark to introduce reflected light or transmitted light of irradiated light into a predetermined direction.

(23) A reading apparatus is characterized by comprising a means for reading information recorded in an IC chip; and a means for reading information by an embossment.

(24) A reading apparatus is characterized by comprising a means for reading magnetic information; a means for reading information recorded in an IC chip; and a means for reading information by an embossment.

(25) An information recording medium is characterized by comprising the fourth information other than magnetic information, information recorded in an IC chip and information by an embossment.

(26) An information recording medium is characterized by comprising at least one of magnetic information, information recorded in an IC chip and information by an embossment and the fourth information other than magnetic information, information recorded in an IC chip and information by an embossment.

(27) An information recording medium is characterized by comprising at least one of magnetic information, and information recorded in an IC chip, information by an embossment and the fourth information other than magnetic information, information recorded in an IC chip and information by an embossment.

(28) In the information recording medium of (26) to (27), the fourth information is information readable optically.

(29) In the information recording medium of (28), the information readable optically is an optical mark whose reflection ratio or transmission ratio for irradiated light becomes a predetermined value.

(30) In the information recording medium of (28), the information readable optically is an optical mark whose reflection ratio or transmission ratio for irradiated light in a specific wavelength region is different from that for irradiated light in the other wavelength region.

(31) In the information recording medium of (26) to (27), the fourth information is information using a polarizing direction of reflected light or transmitted light accompanying a specific rotation for a polarizing direction of incident light.

(32) In the information recording medium of (31), the information is rotation information of the polarizing direction by photo magnetic effect for the irradiated light.

(33) In the information recording medium of (31), the information is rotation information of the polarizing direction caused by the case that the irradiated light passes through a double refracting material.

(34) In the information recording medium of (26) to (27), the fourth information is a mark whose reflection ratio or transmission ratio is a predetermined value for a polarizing direction of incident light.

(35) In the information recording medium of (34), the information is a mark provided so as to have a predetermined angle for a polarizing direction of incident light to a polarizing filter to allow a specific polarizing light component to pass through.

(36) In the information recording medium of (26) to (27), the fourth information is an optical mark constructed by a material to emit light by irradiated light.

(37) In the information recording medium of (26) to (27), the fourth information is an optical mark to introduce reflected light or transmitted light of irradiated light into a predetermined direction.

## BRIEF DESCRIPTION OF THE DRAWINGS

Fig. 1 is a schematic view showing the outline of an example of the embodiment of an optical pickup device of this invention.

Fig. 2 is an illustration showing a surface of the detection object 107 having a character (the numeral 4 in this embodiment).

Fig. 3 is an illustration showing a photo-diode.

Fig. 4 is an illustration showing a laser diode.

Fig. 5 is an illustration showing an arrangement of the laser diode.

Fig. 6 is an illustration showing light beams diffusely reflected by a flat portion and a concave portion.

Fig. 7 is a block diagram showing a pattern recognition circuit.

Figs. 8, 9 and 10 are illustrations showing a conventional surface displacement detecting apparatus.

Figs. 11 and 12 are illustrations showing a technique how a convex portion of a detection object is read.

Fig. 13 is a block diagram showing a recording section.

Fig. 14 is a illustration showing an optical type surface displacement detecting apparatus of this invention.

Fig. 15 is an illustration showing an example of the case where a convex portion of a detection object is detected by using a PSD.

Fig. 16(a) is an illustration showing a pattern having a reflectance different from that of the ground of an information recording medium.

Fig. 16(b) is an illustration showing a reading optical system.

Fig. 16(c)) is a block diagram showing a pattern discriminating circuit.

Fig. 17 is an illustration showing a relation between a reflectance and a wavelength.

Figs. 18(a), 18(b) and 18(c) are illustrations showing an embodiment to read the fourth information indicated by a phase varying film provided on a detection object.

Fig. 19 is an illustration showing an example using a polarization with a specific rotation.

Fig. 20 is an illustration showing an embodiment to read the fourth information indicated by a MO (magneto-optic) film provided on a detection object.

Fig. 21 is an illustration showing an embodiment to read the fourth information indicated by a phase plate (1/4 $\lambda$ plate) provided on a detection object.

Figs. 22 and 23 are illustrations showing an embodiment to read the fourth information indicated by a polarization coating provided on a detection object.

Figs. 24(a) and 24(b) are illustrations showing an embodiment to read the fourth information indicated by a polarizing filter provided on a detection object.

Figs. 25(a) to 25(e) are illustrations showing an embodiment to read the fourth information indicated by a diffraction grating provided on a detection object.

Figs. 26 to 29 are illustrations showing another embodiment to read the fourth information indicated by a diffraction grating provided on a detection object.

## DETAILED DESCRIPTION OF THE PREFERRED EMBODIMENTS

The optical pickup device and the optical type surface displacement detecting apparatus of this invention will be explained in the following.

The optical type surface displacement detecting apparatus of this invention is an apparatus for optically detecting a convex, a concave or a hole on a detection object, and comprises an optical pickup device and a scanning unit for relatively moving a light to be applied to the detection object to said detection object. It is desirable that the scanning unit has a transport unit for transporting the detection object such as a roller or a belt. However, the scanning unit may comprises an optical pick-up apparatus conveying section to shift the optical pick-up apparatus. With regard to the relative conveyance speed, it may be preferable that the relative conveyance speed is not smaller than 1 m/sec, more preferably, not smaller than 2 m/sec. Incidentally, it may be permissible that the optical type surface displacement detecting apparatus may detect only a convex, a concave or a hole. However, it may be preferable that the optical type surface displacement detecting apparatus detects an amount of the displacement of the convex, the concave or the hole. Further, it is desirable that the optical type surface displacement detecting apparatus has a pattern recognition unit for recognizing a pattern on the surface of the detection object from the information on the displacement of the convex, the concave or the hole on the detection object.

Owing to it that the surface displacement detecting apparatus comprises this pattern recognition unit, it is possible to use it as an information reading apparatus for reading in more detail the information of a detection object which is recorded by the convex, the concave or the hole. Accordingly, it is also possible to use the optical type surface displacement detecting apparatus as an information reading apparatus for an information recording medium.

Further, the optical pickup device of this invention comprises a light source, an optical element to irradiate a detection object with a light emitted from said light source, a condenser lens collecting the reflected light which has been applied to said detection object through said optical element and diffusely reflected by the surface of said detection object, and a light receiving element for receiving the light collected by said condenser lens. In addition, it is also appropriate that the optical pickup device comprises a scanning unit to relatively shift the light irradiated onto the detection object to the detection object and a pattern recognition unit.

Further, the optical type surface displacement detecting apparatus or the optical pickup device of this invention detects the convex, the concave or the hole of an detection object, or preferably the amount of displacement of the convex, the concave or the hole from the light receiving position of a light receiving element. Preferably, a convex, a concave, or a hole of the detection object is detected from signals outputted from the light receiving element based on the light receiving position.

For the light source, various kinds of light sources can be used. it may be LED, a halogen lamp, or a laser light source such as a laser diode emitting a laser beam. It is desirable to use the laser light source having a large light condensing effect. As a wavelength of the light source, if PD or PSD is used as a light receiving element, it may be preferable that the wavelength is 600 to 1000 nm.

It is desirable that the light receiving element is one capable of detecting the displacement of the light receiving position. That is, it may be preferable that the light receiving element generates an output signal corresponding to the light receiving position on the light receiving element. Further, it must be an element at least capable of detecting the light emitted from the light source. As a concrete example, it is desirable a semiconductor position sensing device (PSD) or a photodiode (PD). In particular, a PSD array or an array-shaped photodiode is desirable. Further, it is also possible to use a light receiving element having a light receiving portion divided into multiple cells such as a CCD sensor. Further, it is desirable that the displacement of the light receiving position on the light receiving element is based on the change in an angle of the optical axis of the light flux introduced to the light receiving element in accordance with a convex, a concave or a hole of the detection object. Further, it is desirable that the displacement of the light receiving position on the light receiving element is a positional displacement in the direction parallel to the light receiving element. It is more desirable that the displacement is a positional displacement in the direction perpendicular to the optical axis. Further, it is desirable that the displacement is not a positional displacement in an arbitrary direction, but a positional displacement on a certain straight line (one dimensional displacement). The change in an image height for the light receiving system due to the surface displacement of the detection object is converted through the light receiving element into the change in the image forming position on the light receiving element. The light receiving element may be made by a simple lens structure. By making such a structure, it is possible to obtain a low-priced apparatus capable of detecting a convex, a concave or a hole on a detection object, or preferably the displacement of the convex, the concave or the hole on the detection object precisely. Further, it may be a reason for this that a dynamic range of reading signals can be made large. Besides, it is desirable that the light receiving element has a means for serially transmitting the variation of the detected quantity or the detected position with time as an electric signal. Owing to this structure, the apparatus becomes favorable because it is capable of detecting the variation of the surface displacement accompanied by the positional variation of the detection object, in the case where the surface displacement is detected while the detection object and the light are relatively being moved. As the light receiving element of the present invention, a plurality of light receiving elements or a light receiving element split into a plurality of light receiving elements may be used. Further, it may be desirable that the plurality of light receiving elements or the light receiving element split into plural elements is arranged in a straight line. Also, those elements may be arranged in a staggered form or a curved form. Preferably, those elements are arranged in a direction crossing the scanning direction of the light on the detection object.

Further, the condenser lens may be a lens having a the condensing function and may be a glass lens or a plastic lens. Also, the condenser lens may be a single convex lens or a combination of a convex lens and a concave lens. Furthermore, the condenser lens is a hologram lens, a Fresnel lens, a GRIN lens, a diffraction grating, or a refraction index distributing lens. Further, it is desirable that the condenser lens does not move in the direction of the optical axis at the time of detecting the detection object. With this structure, since a movable section is not needed, there are advantages that the condenser lens is superior in reliability and durability. It is desirably an aspherical lens, in order to suppress aberration on the light receiving elements.

Furthermore, it may be preferable that the condenser lens is a positive lens having a small numeral aperture (NA). By using a positive lens having a small numeral aperture, since a depth of focus on the detection object becomes deeper, it becomes possible to irradiate the light receiving element with a sufficiently focused light flux regardless of a position of the detection object on the axis. That is, it becomes possible to have a sufficient margin for a setting deviation on the position of the detection object on the axis. More concretely, in the case of the positive lens, it may be preferable to use a lens having a NA not larger than 0.2. In this case, since the diameter of a spot having a high image resolution power becomes to be not larger than 0.3 mm, the depth of focus preferably become to be not less than ± 0.75 mm. Especially, it may be more preferable to use a lens having a NA not larger than 0.15. In this case, since the diameter of a spot having a high image resolution power becomes to be not larger than 0.3 mm, the depth of focus preferably become to be not less than ± 1.0 mm.

Further, it is desirable that the optical element comprises a lens or a member having a predetermined opening portion section. Further, the optical element may have a line-shaped light generating optical element which makes the light on the detection object become a line-shaped light by collecting, polarizing, or intercepting the light emitted from the light source. For the line-shaped light generating optical element, it is desirable that it comprises a slit, a cylindrical lens, or the like. It may have both of the slit and cylindrical lens. To state it concretely, it can be cited a combination of a slit and a collimator lens, or a combination of a slit and a positive convex lens. In the case of the combination of a collimator lens and a slit, it is not necessary to provide a slit in the vicinity of the detection object, but an arrangement of comparatively high freedom is possible. On the other hand, in the case where the optical element comprises only a slit or a combination of a slit and a positive lens, it is necessary to dispose the slit in the vicinity of the detection object. That is, it is necessary to apply a light to the detection object through a predetermined aperture in the vicinity (desirably not larger than 5 mm) of the detection object. Among the above structures, if the more preferable structures are picked up, an embodiment in which a slit is provided in the vicinity of the detection object, an embodiment in which light is passed parallel light through the slit by a collimator lens, and an embodiment in which light condensed by a lens is irradiated on the detection object may be listed. Since the image resolution in reading can be enhanced, these embodiments are preferable. Further, the optical element may comprise a splitting portion for splitting the light emitted from the light source into a plurality of bundles of rays. Further, there may be provided a condensed light spot array producing optical element arranges the light on the detection object to be in a form of a plurality of condensed light spot arrays. To state it concretely, a plurality of lenses (for example, a micro-lens array etc.) and a plate having a plurality of holes can be cited. It may be preferable to use parallel light as the light irradiated onto the detection object. As the condensed light spot array producing optical element, a micro-lens array or a plurality of optical fibers may be used. The following embodiments may be preferable. After light flux emitted from a light source is shaped in parallel light by a collimator lens, the parallel light is introduced into a micro-lens array in which micro-lenses are arranged in a line, or the parallel light is introduced into the plurality of optical fibers. Whereby, a condensed light spot array is formed on the detection object.

Further, it is desirable that the area of the spot on the light receiving element of the collected light having passed the condenser lens is 0.03 mm$^2$ to 3 mm$^2$. More preferably, it is 0.1 mm$^2$ to 0.8 mm$^2$. By making the spot area fall within this range, it is possible to detect a small convex, a small concave or a small hole, more preferably the displacement of the small convex, the small concave or the small hole precisely.

Further, it is desirable that the variation of the area of the spot of the collected light caused by the displacement of the light receiving position on the light receiving element is small. In other words, it is desirable that the light having passed the condenser lens is always focused on the light receiving element even though the light receiving position on the light receiving element varies due to a convex, a concave or a hole of the detection object. By making the structure like this, no focusing mechanism to move the condenser lens in the direction of the optical axis is required, hence, it becomes possible to detect a convex, a concave or a hole (more preferably, the displacement of the convex, the concave or the hole) precisely with a simple structure. To state it more concretely, it is desirable that the variation of the area of the spot of the collected light depending on the light receiving position on the light receiving element falls within the range of 25% to 400% of the area of the spot of the condensed light when detecting the flat surface portion (non-rugged portion and non-holed portion) of the detection object. Incidentally, in the case that the area of spot is 0.03 mm$^2$ to 0.8 mm$^2$, it may be preferable that the above value is 25% to 400%, more preferably, 80% to 200%. In the case that the area of spot is 0.8 mm$^2$ to 3 mm$^2$, it may be preferable that the above value is 90% to 200%, more preferably, 90% to 130%.

It is desirable that the detection object to be detected by the optical pickup device or the optical type surface displacement detecting apparatus is a planer object having a convex, a concave or a hole, and in particular, is a card. Further, the sort of the convex, the concave or the hole is not to be limited, but an embossment having the shape of a letter or a numeral, a simple dot or a line, or a minute ruggedness of a convex, a concave or a hole with a maximum width of 0.3 mm or smaller can be cited. Further, it may be the combination of these. Besides, it is desirable that the range of the displacement in the direction of the height of a convex, a concave or a hole of the detection object to be detected is 1 mm or less, preferably 0.5 mm or less.

Further, several desirable modes in the case where a convex, a concave or a hole of the detection object exists over a long range in the direction perpendicular to the scanning direction of the optical type surface displacement detecting apparatus will be explained in the following. By making the structure as follows, it is possible to detect an one-dimensional distribution (in a direction perpendicular to the scanning direction) of a convex, a concave or a hole of the detection object (preferably, a displacement amount of the convex, the concave or the hole in the direction along their height). Further, by relatively moving the detection object and the light by the scanning unit, it is possible to detect the two-dimensional distribution (in the scanning direction and in the direction perpendicular to the scanning direction) of a convex, a concave or a hole of the detection object (preferably, a displacement amount of the convex, the concave or the hole in the direction along their height).

Firstly, it can be cited a mode in which a light source and a plurality of light receiving elements are provided, a light beam which is emitted from the light source is made to be a line-shaped beam by an optical element comprising a line-shaped light generating portion for generating a line-shaped light beam in the direction perpendicular to the scanning direction (desirably in the direction in which the plurality of light receiving elements are arranged), the line-shaped light beam is applied to the detection object, and the reflected light is collected through a condenser lens to enter the light receiving elements. Further, a light receiving element which is divided into a plurality of portions can be desirably used. Besides, it is desirable that a plurality of light receiving elements are arranged in a line in the direction crossing, preferably perpendicular, to the scanning direction, or it is desirable that a single light receiving element is divided into a plurality of portions in the direction crossing, preferably perpendicular, to the scanning direction.

Secondly, it can be cited a mode in which a plurality of light sources and a plurality of light receiving elements are provided, each of the plural light sources corresponds to each of the light receiving elements, the respective light beams which have been emitted from the plural light sources pass the optical element and are applied to the detection object, and the reflected light beams are collected through the condenser lens to enter the respective light receiving elements. Further, a single light receiving element which is divided into a plurality of portions can be also desirably used. Besides, it is desirable that the plural light receiving elements are arranged in a line in the direction crossing, preferably perpendicular, to the scanning direction, or it is desirable that a single light receiving element is divided into a plurality of portions in the direction crossing, preferably perpendicular, to the scanning direction.

Thirdly, it can be cited a mode in which a light source and a plurality of light receiving elements are provided, the light beam emitted from the light source are split into a plurality of bundles of rays by the optical element comprising a splitting portion, each of the bundles of rays obtained by splitting is applied to the detection object, and the reflected light beams are collected through a condenser lens and enter the respective light receiving elements. Further, a single light receiving element which is divided into a plurality of portions can be also desirably used. Besides, it is desirable that the plural light receiving elements are arranged in a line in the direction crossing, preferably perpendicular, to the scanning direction, or it is desirable that a single light receiving element is divided into a plurality of elements in the direction crossing, preferably perpendicular, to the scanning direction.

In the above-described first mode, for an example of the line-shaped light generating portion, it is desirable an optical element having directivity in the light collecting function such as a cylindrical lens having a flat surface on one side and a cylindrical surface on the opposite side, a Grin lens, a hologram, or a diffraction grating. By using such an optical element having directivity in the light collecting function for the line-shaped light generating portion, a light source of strong light emission is not required, and the apparatus can be made to be of low cost, of low power consumption, and small-sized. However, it is possible to use a member having a predetermined aperture such as a slit for the line-shaped light generating portion.

Further, in the case where an optical element having directivity in the light collecting function is used for the line-shaped light generating portion and the light source is a laser diode, it is desirable that the laser diode is provided in such a manner as to make the direction of the long axis of the far-field pattern having a shape of an ellipse agree with the direction of the line of the line-shaped light. By making the structure as this, a light of high intensity having a uniformity in the direction of the line of the line-shaped light can be obtained, and the light collection performance to one direction in the optical element having directivity in the light collecting function is improved; hence, the line-shaped light beam on the detection object is made uniformly thin, which improves the optical reading performance. Besides, the efficiency of light utilization is made higher.

Further, it is desirable that, in the above-described first, second, and third mode, a PSD array or an array-shaped photodiode divided into (m x n) portions is used for the light receiving element.

Further, it is desirable that the width of the light beam on the detection object in the scanning direction (in the moving direction) is smaller than the width of the convex, the concave or the hole of the detection object in the scanning direction. More concretely, the width of the light is 0.3 mm or less, more preferably, 0.1 mm or less. By this structure, it is possible to produce a situation such that the light is applied to the concave or convex portion, but not to the flat surface portion. Therefore, it can be easily detected whether the portion is convex or concave, or a flat surface, which improves the precision of reading the convex, the concave or the hole. Besides, it is desirable, in the case of this structure, to use a fixed illumination optical system which makes the width of the light beam equal to or smaller than the width of the convex or concave portion, in the both cases where the light is applied to the convex or concave portion of the card and where the light is applied to the flat surface portion of the card.

In the following, more concrete embodiments of the invention will be explained with reference to the drawings.

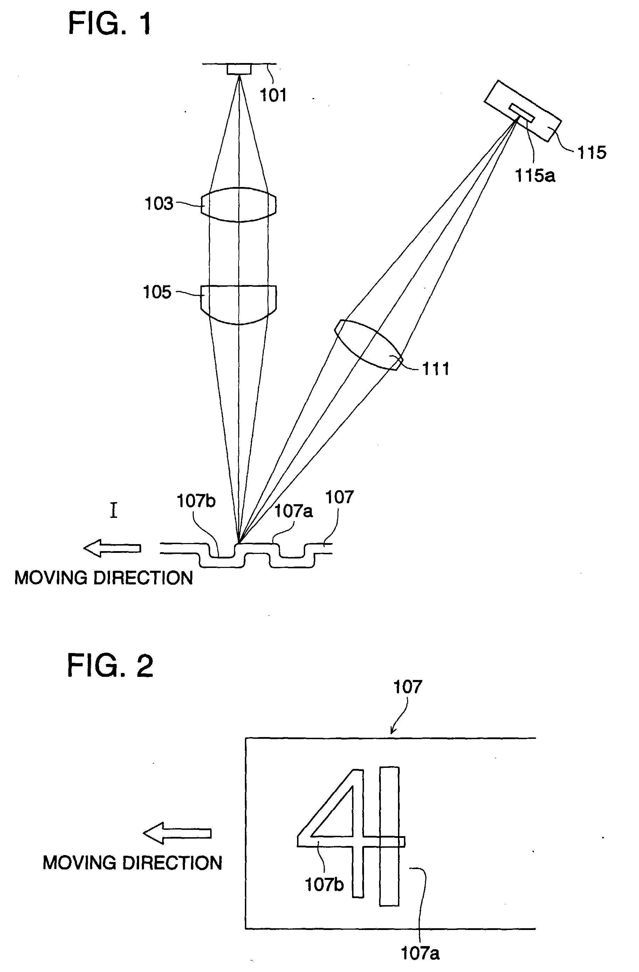

Fig. 1 is a drawing showing the outline of an example of the embodiment of an optical pickup device of this invention. The optical pickup device comprises the laser diode (hereinafter referred to as LD) 101 denoting a light source, the collimator lens 103 denoting an optical element, the cylindrical lens 105 (the cylindrical lens 105 is also a line-shaped light generating portion), the condenser lens 111, and the array-shaped photodiode (hereinafter referred to as PD) 115. Further, the detection object 107 is moved in the moving direction by the scanning unit of the optical type surface displacement detecting apparatus, which is not shown in the drawing.

In Fig. 1, the laser beam emitted from the LD 101 is made parallel by the collimator lens 103, is converged in one direction by the cylindrical lens 105, is made a line-shaped beam, and is applied to the detection object 107 on the surface of which the flat surface portion 107a and the concave portion 107b are formed.

The detection object 107 is made such one as to be moved in the direction crossing the direction of the line of the line-shaped light beam (the direction of the arrow mark I in the drawing) by the scanning unit. The surface of the detection object 107 has a character (the numeral 4 in this embodiment) formed by the concave portion 107b which is formed in the flat surface portion 107a as shown in Fig. 2. In addition, the convex, the concave or the hole in this invention should not be limited to any one of the characters as described in the above, but the invention can be applied to all kinds of the convex, the concave or the hole provided on the detection object.

Returning to Fig. 1, the diffusely reflected light by the surface of the detection object 107 is collected by the condenser lens 111, and reaches the PD 115. The light receiving surface 115a of this PD 115 is divided into (m x n) portions (in this example of the embodiment, (2 x 8) portions).

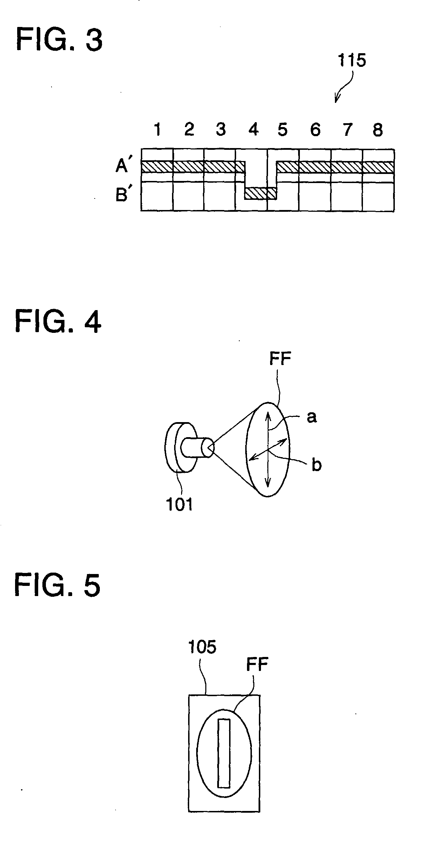

Further, the PD 115 is provided, with respect to the reflected light, in an arrangement such that the direction of the line of the line-shaped light beam on the detection object 107 agrees with the direction of the n-divided array of the light receiving surface 115a. As shown in Fig. 4, the LD 101 has its far-field pattern FF making an ellipse with the long axis a and the short axis b. In this example of the embodiment, as shown in Fig. 5, the LD 101 is provided in an arrangement such that the direction of the long axis a agrees with the direction of the line of the line-shaped light formed by the cylindrical lens 105.

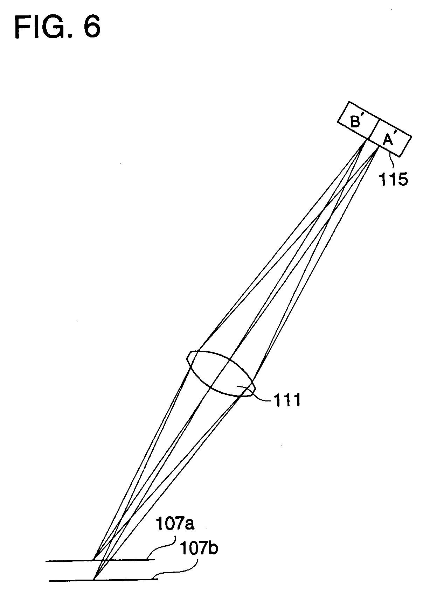

In the following, the operation of the above-described structure will be explained. As shown in Fig. 6, the light beam diffusely reflected by the flat portion 107a of the detection object 107 comes to A' of the PD 115, and the light diffusely reflected by the concave portion 107b comes to B' of the PD 115, to make the light receiving position different. In the case that the hole exists on the surface, since the light is not reflected from the hole, the light is not let to be incident on the sections of A' and B' of the PD 115. In addition, the light is in the state of being focused on the PD in both of A' and B'.

Accordingly, by observing whether the output of the PD shown in Fig. 3 comes from A' or from B', it can be judged whether the corresponding light is the light diffusely reflected by the flat portion 107a of the detection object 107 or the light diffusely reflected by the concave portion 107b. That is, the convex, the concave or the hole of the detection object can be discriminated by the displacement of the light receiving position (A' or B') on the PD denoting a light receiving element. In the case that the value of (the output in A' + the output in B') is smaller than a predetermined value, it can be judged that the hole is detected. Also, by detecting the ratio of the output in A' to the output in B', the amount of the displacement in the concave or the convex can be detected. Therefore, if there is a concave, the change in the displacement amount can be read as displacement information. Further, on the basis of the output signals from the light receiving portion of the PD 115 which is divided into n portions in the direction of the line of the line-shaped light beam, it can be detected the one-dimensional distribution of the displacements (in the direction perpendicular to the scanning direction) in the height direction of the surface of the detection object 107.

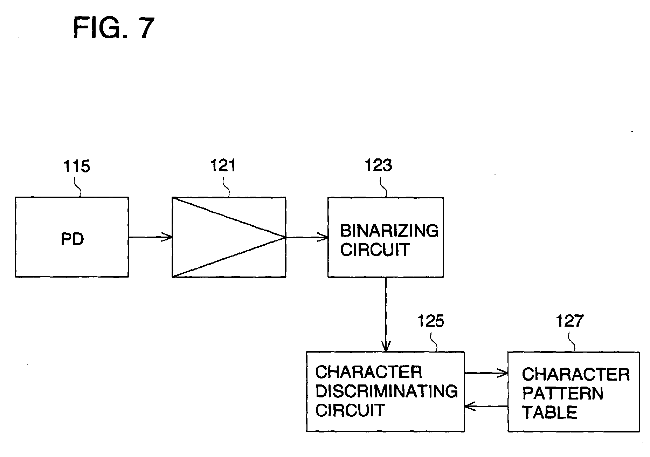

Further, by moving the detection object 107 in the direction of the arrow mark in Fig. 1, it can be detected the two-dimensional distribution of the displacements (in the scanning direction and in the direction perpendicular to the scanning direction) in the height direction of the surface of the detection object 107. Further, by providing a pattern recognition circuit as shown in Fig. 7, it makes a pattern recognition unit.

In Fig. 7, 121 denotes an amplifier for amplifying the analogue signal from the PD 115, 123 denotes a binarizing circuit for binarizing the amplified analogue signals, 125 is a character discriminating circuit for discriminating a character by comparing the binarized signals and the character pattern table 127.

Besides, the invention should not be limited to the above-described example of the embodiment. In the above-described example of the embodiment, the PD 115 of m = 2 is used; however, even though m = 1, it is possible to detect the flat surface portion 107a and the concave portion 107b of the detection object 107. That is, the flat surface portion 107a and the concave portion 107b can be detected by it that one of the diffusely reflected lights which come from the flat surface portion 107a and the concave portion 107b respectively enters the light receiving surface of the PD and the other does not enter it.

Further, in the case where the detection object is composed of a flat surface portion, a concave portion, and a convex portion, these flat surface portion, concave portion, and convex portion can be detected by using a PD of m = 3. Further, by making any one of the reflected lights which come from the flat surface portion, concave portion, and convex portion respectively not enter the light receiving surface of the PD, a PD of m = 2 may be used.

Further, the larger the value of n of the PD 115 is made, the higher the resolution becomes. Further, for the light receiving element, instead of the one having (m x n) divisions, an array-shaped PD divided into n portions in the direction of the line of the line-shaped light beam applied to the detection object, or a plurality, n, of PD's or PSD's, which are arranged in the direction of the line of the line-shaped light beam may be used. Further, because a PSD can detect the light receiving position at a higher precision than a PD, it is desirable to use a PSD in the case where a high precision is aimed at. Further, since the displacement of the concave and the convex for the reference surface of the detection object (a plane surface of the card) can be read from the output signals of PSD, there is a merit that an allowable range for the positional precision of the detection object becomes large. On the other hand, because a PD is cheaper than a PSD, it is desirable to use a PD when cost is regarded as important.

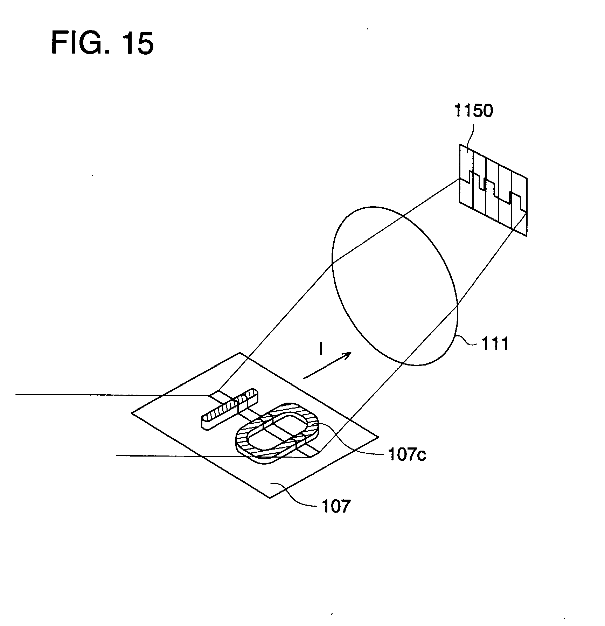

An example of the case where the convex portion of a detection object is detected by using a PSD is shown in Fig. 15. In Fig. 15, the light applied to the detection object 107 having the convex portion 107c is diffusely reflected and collected by the condenser lens 111, and is received by the PSD 1150, which detects the convex portion by the difference of the light receiving position.

Further, for the optical element, it is appropriate to use not an optical element having a converging function only in one direction but an optical element having different converging functions in two directions. That is, by using an optical element having different converging functions in two directions, a certain direction (X-direction) in the perpendicular plane to the optical axis (Z-direction) and the direction perpendicular to this (Y-direction), it is possible to substitute the collimator lens 103 and the cylindrical lens 105 in Fig. 1 by a single optical element having directivity in the light converging function. In this case, either the X-direction or the Y-direction is made to agree with the direction of a generating line of the cylindrical lens 105.

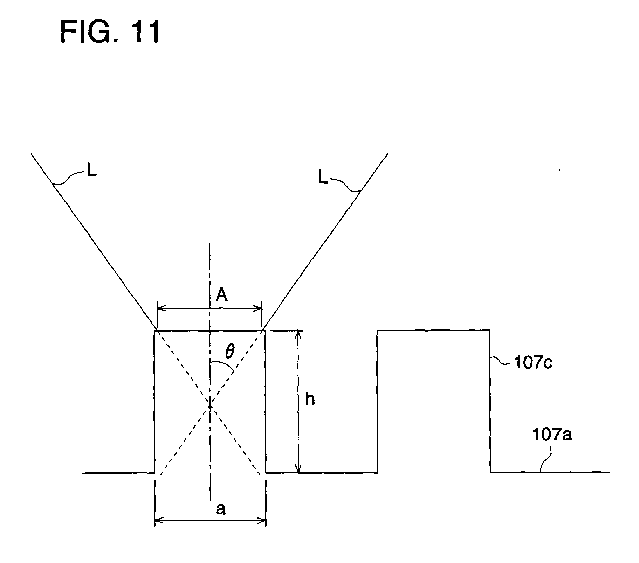

Further, Fig. 11, differing from Fig. 1, is a drawing showing how the convex portion of a detection object is read. It shows the mode in which the width of the line-shaped light beam in the scanning direction is smaller than the width of the convex, the concave or the hole of the detection object in the scanning direction. As shown in Fig. 11, the width (A) of the laser beam L, which is converged in one direction by the cylindrical lens 105, on the surface of the detection object 107 is made equal to or smaller than the width (a) of the convex portion 107c.

By this structure, the reflected light by the convex portion 107c is made not to include the information from the flat surface portion 107a; hence, it can be easily detected whether the light comes from the convex portion 107c or from the flat surface portion 107a, which improves the precision of reading the convex portion 107c. Of course, the above-described mode can be applied to a concave portion in the same manner.

Further, let h be the height Of the convex portion 107c, then the angle of convergence (θ) in the direction where the cylindrical lens 105 has a converging function should satisfy the following expression:

$$\tan\theta \leq h/a \qquad (1).$$

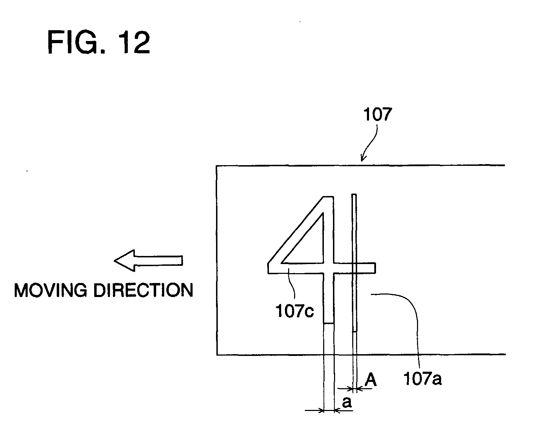

If θ satisfies the expression (1), as shown in Fig. 12, in either of the flat surface portion 107a and the convex portion 107c of the detection object, the width (A) of the laser beam L becomes equal to or smaller than the width (a) of the convex portion 107c.

Owing to this structure, it is not required to move the light source, the collimator lens, the cylindrical lens, etc. in the direction of the optical axis in order to make the width of the laser beam on the detection object smaller than the width of the convex portion. That is, the fixed illumination optical system can be satisfactorily used, which makes it possible to simplify the structure.

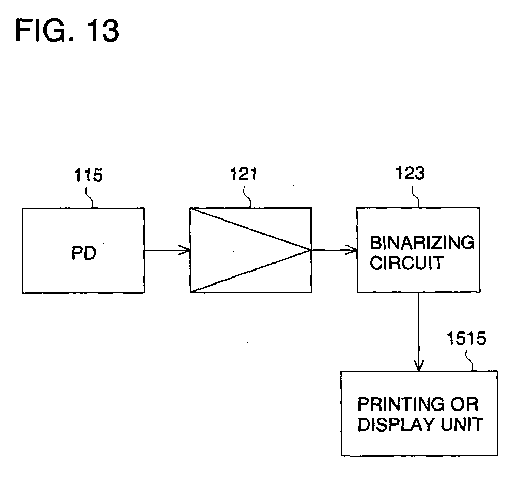

Further, this invention should not be limited to an apparatus for recognizing a character formed by a convex, a concave or a hole. For example, as shown in Fig. 13, it also is possible that the analogue output from the PD 115 is amplified by the amplifier 121, and is binarized in the binarizing circuit 123, to print out or display the pattern formed by the convex, the concave or the hole in the printing or display unit 1515 such as a printer or a display.

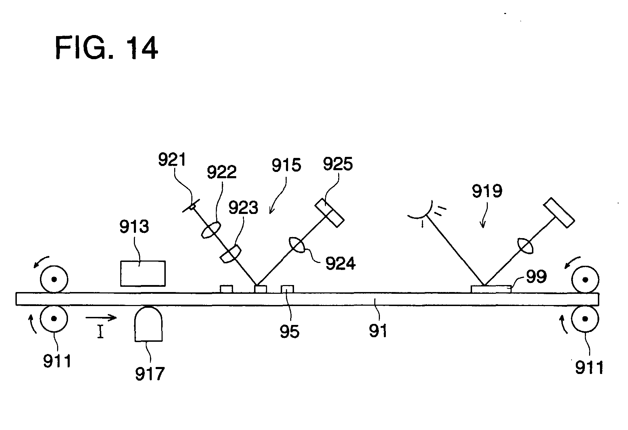

In the following, an embodiment of an example of application of an optical type surface displacement detecting apparatus of this invention will be explained with reference to Fig. 14, and Fig. 16 to Fig. 29. On the surface of the detection object (information recording medium) 91 used in this embodiment, there are provided information recorded in an IC chip (hereinafter referred to as IC information) and the character information based on the convex portion 95 (hereinafter referred to as ruggedness information or embossment information).

Further, on the rear surface of the information recording medium 91, there is provided information recorded in a magnetic stripe (hereinafter referred to as magnetic information). Further, on the front or rear surface of the information recording medium 91 (front surface in this embodiment), there is provided the fourth information 99 which is information other than the IC information, the ruggedness information, and the magnetic information. Incidentally, in the present invention, the information recording medium 91 stores the IC information, the embossment information, the magnetic information and the fourth information. However, the present invention is not limited to this embodiment. The information recording medium may store either one of the IC information, the embossment information, the magnetic information and the fourth information, such as only the fourth information. Also, The information recording medium may store the fourth information in combination with one or tow of the IC information, the embossment information and the magnetic information.

On the other hand, the apparatus for reading this information recording medium 91 is equipped with the IC chip reading unit 913 for reading the IC information of the IC chip 93, the convex portion reading unit 915 (an optical pickup of this invention) for optically reading the convex information of the convex portion 95, the magnetic stripe reading unit 917 for reading the magnetic information of the magnetic stripe 97, and the fourth information reading unit 919 for reading the fourth information. By this structure, it is possible to make the precision of reading higher. However, this invention is not limited to the structure shown in the drawing, and regarding the reading unit, this invention includes the apparatus which is equipped with at least one of the above-described four reading units. Further, any combination of the units out of the above-described four reading units may be suitably employed.

Further, the information recording medium 91 is made to be conveyed in the direction of the arrow mark by the roller pair 11.

In the following, the fourth information and the fourth information reading unit will be explained.

(1) THE CASE WHERE THE FOURTH INFORMATION IS CAPABLE OF BEING READ OPTICALLY

1-1. FIRST EXAMPLE OF THE EMBODIMENT

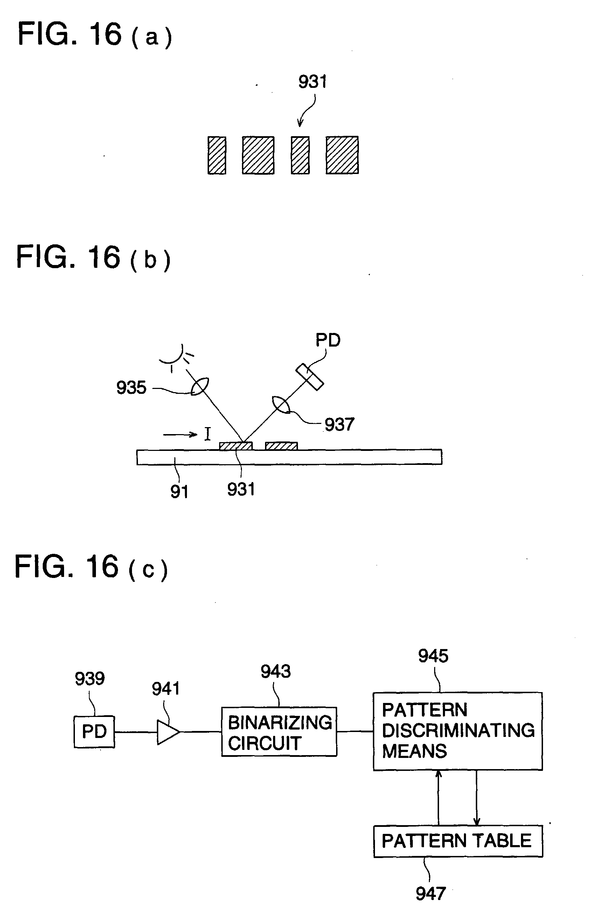

As shown in Fig. 16(a), as the fourth information, it is provided the pattern 931 having a reflectance different from that of the ground of the information recording medium 91. For example, the color of the ground of the information recording medium 91 is white, then the black pattern 931 is provided.

Further, as the fourth information reading unit 931, the reading optical system as shown in Fig. 16(b) is provided. 933 denotes an illumination source emitting a visible light, 935 denotes a condenser lens collecting the light emitted from the illumination source 933, 937 denotes a condenser lens collecting the light reflected by the information recording medium 91, and 939 denotes a photodiode (hereinafter referred to as PD) receiving the collected light.

On the basis of it that the intensity of the light reflected by the ground of the information recording medium 91 is different from the intensity of the light reflected by the pattern 931, the data concerning the variation of the light intensity in accordance with the pattern 931 can be obtained. As shown in Fig. 16(c), the output of the PD 939 is amplified by the amplifier 941, is binarized by the binarizing means 943, and the pattern discriminating means 945 refers to the data in the pattern table 947 and compares the binarized data with them, to discriminate the pattern 931.

In addition, in the above-described embodiment, the explanation has been made for the pattern 931 having a reflectance different from that of the ground of the information recording medium 91; however, in the case where an information recording medium capable of being read by the transmitted light and a reading optical system for it are used, the pattern having a transmittance different from that of the ground of the information recording medium 91 also can be discriminated by a similar structure.

## 1-2. SECOND EXAMPLE OF THE EMBODIMENT

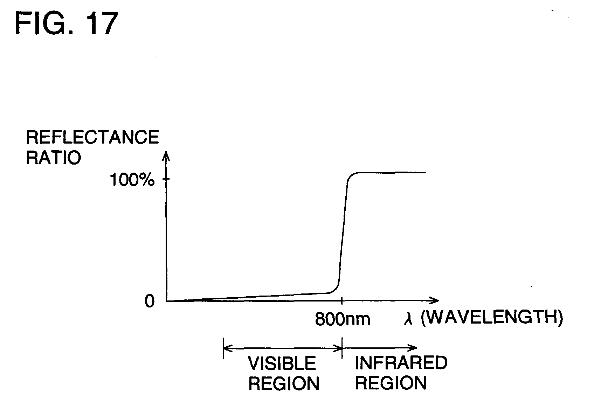

In the first example of the embodiment, the explanation has been made for the pattern 931 having a reflectance or a transmittance for a visible light different from that of the ground of the information recording medium 91; however, it is appropriate to form the pattern 931, as shown in Fig. 17, of a material having an extremely low reflectance or transmittance in the wavelength region of visible lights (hereinafter referred to as visible region) and an extremely high reflectance or transmittance for an infrared light.

In this case, by making the illumination by an infrared light, the pattern 931 can be discriminated. Further, it is also appropriate that the pattern is formed of a material having a low transmittance in the infrared region and the ground is made to have a higher transmittance than the pattern for an infrared light.

According to the above-described structure, there is an advantage that the presence of the pattern 931 can not be visually recognized and the content of the print written under the pattern 931 can be visually recognized.

Besides, in the above-described structure, discrimination has been made using the difference in the transmittance for an infrared light, but it is also possible to use the difference in the transmittance for an ultraviolet light.

Furthermore, in this example of the embodiment, the pattern 931 is provided, but it is appropriate that the whole surface of a predetermined area of the information recording medium 91 is coated with a material having an extremely low reflectance or transmittance in the visible region, and having an extremely high reflectance or transmittance for an infrared light.

## 1-3. THIRD EXAMPLE OF THE EMBODIMENT

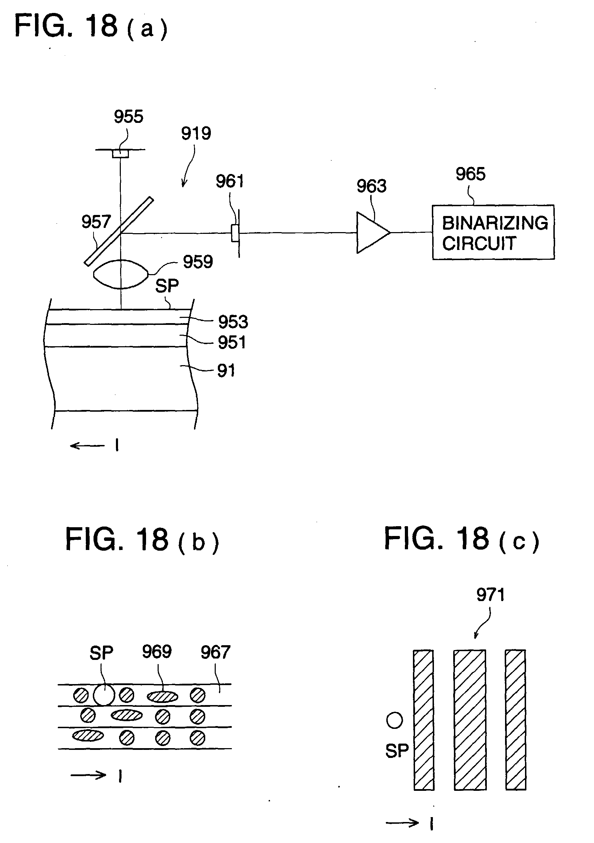

As shown in Fig. 18(a), for the fourth information, on the information recording medium 91, there are provided the phase varying film 951 and the protective layer 953 in which the fourth information is recorded.
The laser beam emitted from the LD 955 is transmitted through the semitransparent mirror 957, is collected by the condenser lens 959, and the spot-shaped beam is applied onto the phase varying film 951 on the information recording medium 91.

The light reflected by the phase varying film 951 is collected by the condenser lens 959, is reflected by the semitransparent mirror 957, and enters the PD 961. The output of the PD 961 is amplified by the amplifier 963, and is binarized by the binarizing means 965.

For the method of recording information in the phase varying film 951, as shown in Fig. 18(b), there are a method in which there are provided recording marks 969 having a reflectance different from the ground and a different length from one another on the plurality of line-shaped tracks 967, and as in the optical disk device, the spot of a laser beam SP is relatively moved along the tracks 967, to obtain the information on reflectance, and as shown in Fig. 18(c), a method in which the pattern 971 having a reflectance different from the ground is formed, and the spot SP is relatively moved in such a manner as to cross the pattern 971, to obtain the information on reflectance.

Further, in the above-described example of the embodiment, the information on reflectance is obtained by using the phase varying film 951 in which reflectance is different in the crystal phase and in the amorphous phase; however, it may be used an organic dye film which is brought in the state of a different reflectance by being given a visible light or heat and an ultraviolet ray. In the case where the above-described phase varying film or the organic dye film is used, the recording of information, in addition to the reproduction of information, can be made.

(2) THE CASE WHERE THE FOURTH INFORMATION UTILIZES THAT THE REFLECTED LIGHT OR THE TRANSMITTED LIGHT IS ACCOMPANIED BY A PARTICULAR ROTATION OF THE DIRECTION OF POLARIZATION AGAINST THE DIRECTION OF POLARIZATION OF THE INCIDENT LIGHT

In general, when a light in a certain state of polarization E1 strike against the surface of a substance such as a glass, a metal, or a plastic and is reflected by it, the state E1 is converted into another state E2.

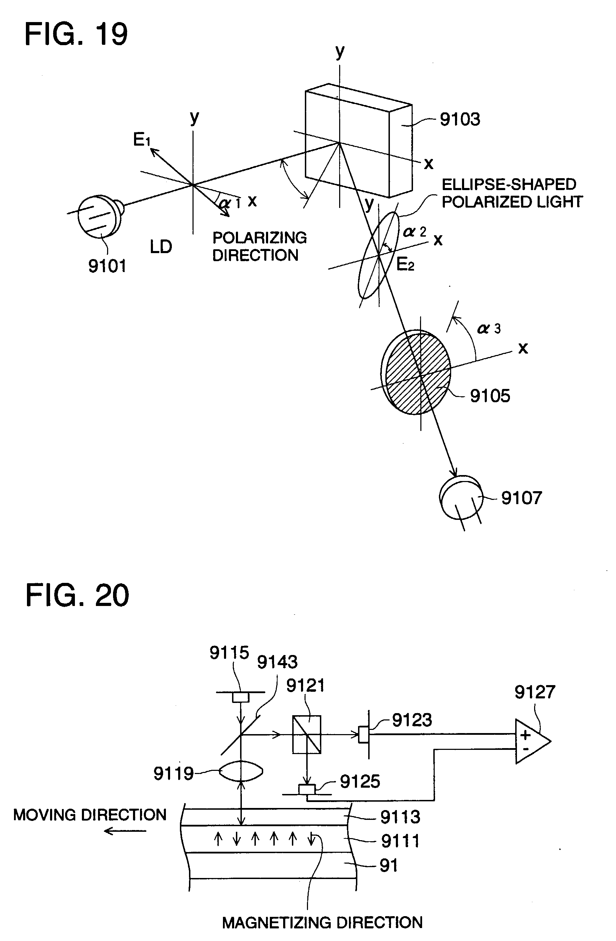

For example, as shown in Fig. 19, when the linearly polarized light E1, which is emitted from the LD 101 and has an orientation $\alpha1$ against the plane of incident light (xy-plane), becomes incident to the surface of a certain substance 9103 at an incident angle $\theta i$ and reflection occurs, the polarized light has a retardation, to make the elliptically polarized light E2.

The orientation of the long axis of the ellipse of the E2 is $\alpha2$, and if the analyzer 9105 is adjusted to this orientation ($\alpha3 = \alpha2$), the light quantity inputted to the PD 9107 as a light receiving element becomes maximum, and in the angles other than this, the light quantity becomes smaller.

The value of $\alpha2$ is not the same for the same E1 and $\theta i$ depending on the material constant. Accordingly, by suitably selecting the substance which makes reflectance, the light quantity transmitted by the analyzer 9105 which is arranged at the angle $\alpha3$ can be made a predetermined value for a certain light emission quantity of the LD 9101.

By such a method, it is possible to give the fourth information to the information recording medium 91 and read it. Besides, this phenomenon is not limited to a reflected light, but by using a substance which is transmittable to the wavelength of the illuminating light such as a glass or a plastic, similar information can be given to the information recording medium for a transmitted light too, and the information can be read.

2-1. FIRST EXAMPLE OF THE EMBODIMENT

As shown in Fig. 20, for the fourth information, the MO (magneto-optic) film 9111 is formed on the information recording medium 91, and further, the protective film 9113 is formed on the MO film 9111.

The laser beam emitted from the LD 9115 is transmitted through the semitransparent mirror 9117, is collected by the objective lens 9119, and the spot-shaped beam is applied onto the MO film on the information recording medium 91. The light reflected by the MO film 9111 is collected by the objective lens 9119, is reflected by the semitransparent mirror 9117, is separated into the P-component and the S-component by the polarized light beam splitter 9121, and the respective components of the separated light enters the PD1, 9123 and the PD2, 9125. The outputs of the PD1, 9123 and the PD2, 9125 are inputted to the differentiating means 9127, to make a reproduction signal. In addition, as occasion demands, the recording of information can be done in addition to the reproduction.

2-2. SECOND EXAMPLE OF THE EMBODIMENT

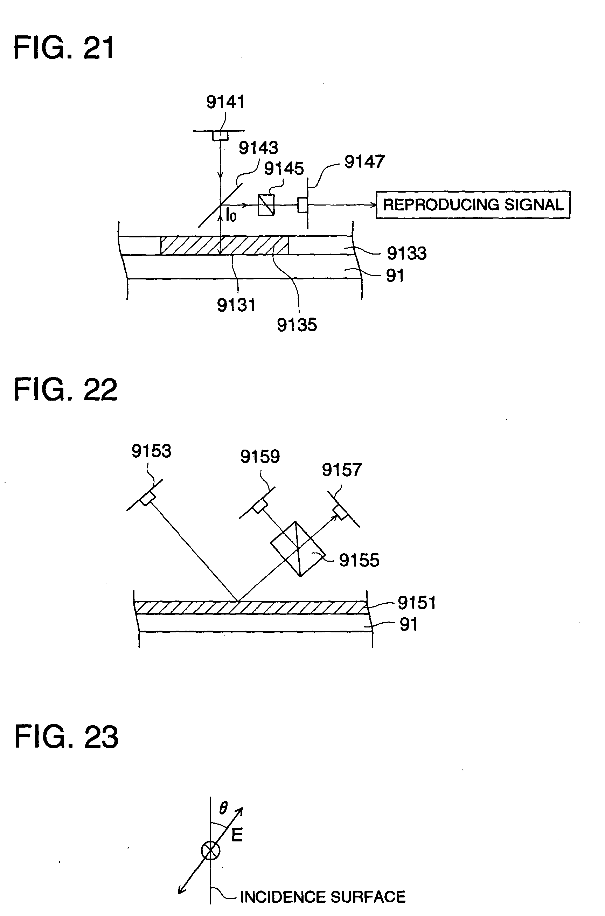

As shown in Fig. 21, for the fourth information, the reflecting surface 9131 is provided on the information recording medium 91, and on the reflecting surface 9131, there is provided the transparent layer 9133 made of a resin which is transparent and generates nearly no phase difference, and further, the phase plate (1/4 $\lambda$ plate) 9135 having a transmittance approximately the same as the transparent layer 9133 is formed at a predetermined position.

The laser beam (linearly polarized light) emitted from the LD 9141 is transmitted through the semitransparent mirror 9143, is transmitted through the transparent layer 9133 or the phase plate 9135 on the information recording medium 91, and is reflected by the reflecting surface 9131.

The light reflected by the reflecting surface 9131 is reflected by the semitransparent mirror 9143, is separated by the polarized light beam splitter 9145, and the separated light components are inputted to the PD 9147, to make a reproduction signal. If the optic axis of the phase plate 9135 is tilted by 45° against the direction of the polarization of the laser beam from the LD9141, the direction of polarization is shifted by 90° between the light which is transmitted through the transparent layer 9133 and is reflected by the reflecting surface 9131, and the light which is transmitted through the phase plate 9135 and is reflected by the reflecting surface 9131.

Accordingly, by providing the polarized light beam splitter 9145, the light quantity reaching the PD 9147 is given a difference.

(3) THE CASE WHERE THE FOURTH INFORMATION IS A MARK OF WHICH THE REFLECTANCE OR THE TRANSMITTANCE HAS A PREDETERMINED VALUE FOR THE DIRECTION OF POLARIZATION OF THE INCIDENT LIGHT

3-1. FIRST EXAMPLE OF THE EMBODIMENT

For the optical mark, as shown in Fig. 22, the polarization coating 9151 is provided on the information recording medium 91.

The characteristic of this polarization coating is made one such that the reflectance for the P-polarized light = Rp, and the reflectance for the S-polarized light = Rs. Further, the direction of polarization of the light emitted from the LD 9153, as shown in Fig. 23, is given as to make the angle $\theta$ with the plane of incident light (a plane made by the beam progressing from the LD to the PD).

The laser beam having been emitted from the LD 9153 is reflected by the polarization coating 9151 on the information recording medium 91. The light reflected by the polarization coating 9151 is separated by the polarized light beam splitter (PBS) 9155, and the separated light components enter the PD1, 9157 and the PD2, 9159 respectively.

Now, let the transmittance of the PBS 9155 for the P-polarized light be 100%, the transmittance of it for the S-polarized light be 100%, and the light quantity of the LD 9153 be lo, then the received light quantity of the PD1 is lo(cosθ)Rp , and the received light quantity of the PD2 is lo(sinθ)Rs .

By suitably selecting Rp and Rs, the ratio of the received light quantity of the PD1 to that of the PD2 can be made a suitable value, and a specified polarization coating can be formed on the above-described recording medium.

3-2. SECOND EXAMPLE OF THE EMBODIMENT

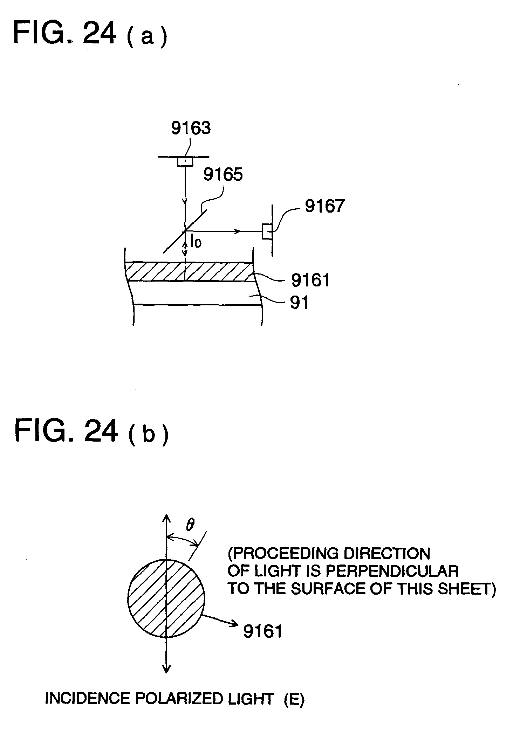

As shown in Fig. 24(a), the polarizing filter 9161 is provided on the information recording medium 91 as an optical mark. The laser beam having been emitted from the LD9163 is transmitted through the semitransparent mirror 9165, and is reflected by the polarizing filter 9161 on the information recording medium 91 and by the information recording medium 91. The reflected light is reflected by the semitransparent mirror 9165 and enters the PD 9167.

As shown in Fig. 24(b), let θ be the angle made by the direction of transmitting a polarized light by the polarizing filter 9161 and the direction of polarization of the incident light, then, for the light quantity lo of the incident light, the following expression is given:

$$IR = lo(cos\theta)AR,$$

where A denotes the maximum transmittance of the polarizing filter 9161, and R denotes the reflectance of the information recording medium 91. Therefore, by suitably selecting θ, a light beam having a predetermined light quantity can be given to the PD 9167.

(4) THE CASE WHERE THE FOURTH INFORMATION IS AN OPTICAL MARK MADE UP OF A SUBSTANCE EMITTING LIGHT BY LIGHT APPLICATION

For example, the surface of the information recording medium is coated with a fluorescent substance which emits light by infrared rays, to make it the fourth information.

When an infrared light is applied, the portion coated with the fluorescent substance emits light, and by detecting this light emitting portion, the fourth information can be read.

(5) THE CASE WHERE THE FOURTH INFORMATION IS AN OPTICAL MARK BY WHICH EITHER THE REFLECTED LIGHT OR THE TRANSMITTED LIGHT OF THE APPLIED LIGHT IS GUIDED TO A PREDETERMINED DIRECTION

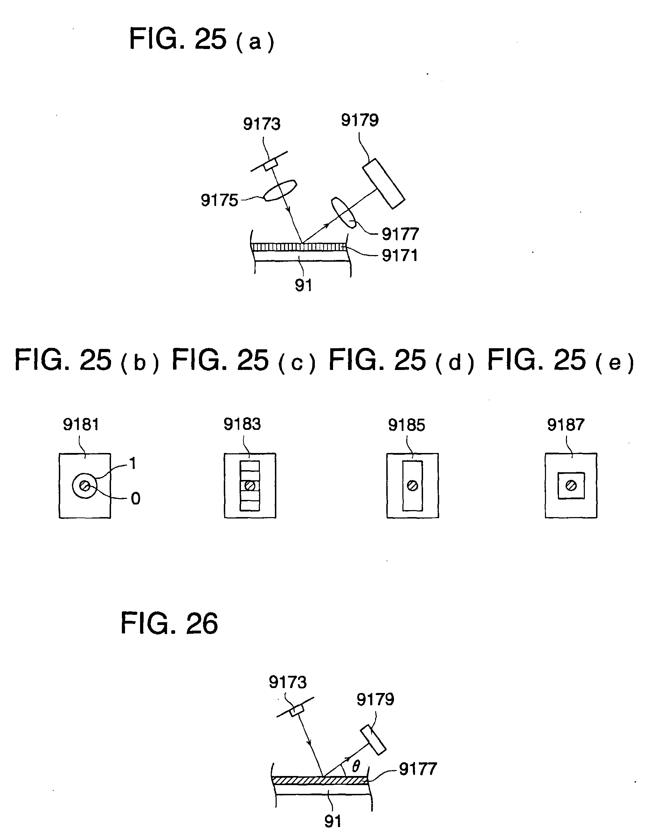

As shown in Fig. 25(a), the diffraction grating 9171 (may be a hologram) is provided on the information recording medium 91 as an optical mark.

The laser beam having been emitted from the LD 9173 is collected by the condenser lens 9175, and the spot-shaped beam is applied onto the diffraction grating 9171 on the information recording medium 91. By the diffraction grating (the optical mark) 9171, the light beam is reflected to a particular direction, and the reflected light is collected by the condenser lens 9177, to enter the light receiving element 9179.

For an example of the light receiving element 9179, the PD 9181 without division as shown in Fig. 25(b) can be used. That is, information is read by it whether the reflected light is directed to this PD 9181 or not.

Further, in the case where a light receiving element capable of detecting even the detecting position of the reflected light such as the divided photodiode 9183 in Fig. 25(c), the PSD 9185 in Fig. 25(d), or the CCD 9187 in Fig. 25(e), as shown in Fig. 26, by varying the orientation (θ) of the reflected light, a large amount of information can be obtained.

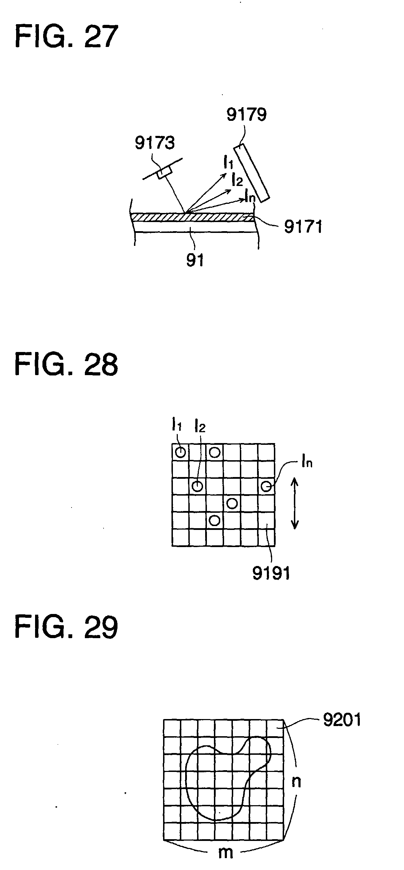

Further, as shown in Fig. 27, if the diffraction grating 9171 is designed to be such one as to reflect the bundle of rays (l1 to ln) to n directions, and for the light receiving element 9179 capable of detecting the positions of these n reflected bundles of rays, as shown in Fig. 28, the divided PD 9191 is used, it is possible to give a single illumination area n bits of positional information or to read them.

By making it possible for the orientation θ of the n reflected bundles of rays to have various angles within a certain range, a number of methods which are made multi-valued can be provided in a minute area. Besides, for the light receiving element, it may be used a two-dimensional CCD sensor or a divided PSD instead of the PD1, 9191.

Further, it is possible that the reflected light by the diffraction grating 9171 is made to have a continuous intensity distribution, and is received by the two-dimensional (m x n) PD 201 as shown in Fig. 29 or a two-dimensional CCD sensor.

The output from each of the cells of the two-dimensional PD 201 is AD-converted, and the arrangement of these can be made the fourth information. In addition, in this example of the embodiment, explanation has been made using a reflected light, but a similar effect can be obtained by using a transmitted light.

According to this invention, it is possible to provide a surface displacement detecting apparatus and an optical pickup device which are of low cost and have a simple structure and are capable of improving the precision of detecting the surface displacement in a convex, concave portion or the like of a detection object.

Besides, disclosed embodiments can be varied by a skilled person without departing from the spirit and scope of the invention.

**Claims**

1. An optical pick-up apparatus, comprising:

   a light source to emit light;
   an optical element to irradiate a surface of an detection object with the light emitted from the light source, wherein the surface of the detection object diffusely reflects the light at reflection angles and the reflection angles are changed due to a concave, a convex or a hole provided on the surface of the detection object;
   a condenser lens to condense the light diffusely reflected from the surface of the detection object; and
   a light receiving element having a light receiving surface and to receive the light condensed by the condenser lens at a light receiving position on the light receiving surface, wherein the light receiving position displaces on the light receiving surface due to the concave, the convex or the hole provided on the surface of the detection object;
   wherein the optical pick-up apparatus detects the concave, the convex or the hole provided on the surface of the detection object from the light receiving position on the light receiving surface, and
   wherein the optical pick-up apparatus comprises a plurality of light receiving elements or the light receiving element is split into a plurality of light receiving elements.

2. The optical pick-up apparatus of claim 1, wherein the light receiving position displaces on the direction parallel to the light receiving surface.

3. The optical pick-up apparatus of claim 1, wherein the condenser lens is fixed so as not to shift in an optical axis.

4. The optical pick-up apparatus of claim 1, wherein the light is condensed by the condenser lens such that an area of a light spot of the light on the light receiving surface is 0.03 mm$^2$ to 3 mm$^2$.

5. The optical pick-up apparatus of claim 1, wherein the area of the light spot when the concave, the convex or the hole provided on the surface of the detection object is detected from the light receiving position of the light receiving element is 25% to 400% of that when a plane surface of the detection object is detected.

6. The optical pick-up apparatus of claim 4, wherein the light condensed by the condenser lens is focused on the receiving surface of the light receiving element.

7. The optical pick-up apparatus of claim 1, wherein the optical element comprises a lens.

8. The optical pick-up apparatus of claim 1, wherein the optical element comprises a slit.

9. The optical pick-up apparatus of claim 1, wherein the detection object is a card having a surface provided with at least one of the concave, the convex and the hole.

10. The optical pick-up apparatus of claim 1, wherein a surface displacement caused by the concave, the convex or the hole is not larger than 1.0 mm.

11. The optical pick-up apparatus of claim 1, wherein the optical pick-up apparatus detects an amount of a surface displacement caused by the concave, the convex or the hole from the displacement in the light receiving position on the light receiving surface.

12. The optical pick-up apparatus of claim 1, wherein the optical pick-up apparatus comprises a plurality of light sources as the light source and each of the plurality of light sources corresponds to one of the plurality of light receiving elements or the light receiving element split into a plurality of light receiving elements so that light emitted from each of the plurality of light sources is let to be incident on the corresponding one of the plurality of light receiving elements through the optical element and the condenser lens.

13. The optical pick-up apparatus of claim 1, wherein the optical pick-up apparatus has only a single light source as the light source and the optical element splits light emitted from the single light source into plural light fluxes so that each of the plural light fluxes is let to be incident on one of the plurality of light receiving elements or the light receiving element split into a plurality of light receiving elements.

14. The optical pick-up apparatus of claim 1, wherein the optical pick-up apparatus has only a single light source as the light source and the optical element is a line-shaped light producing optical element which produces line-shaped light.

15. The optical pick-up apparatus of claim 14, wherein the line-shaped light producing optical element has a light converging direction.

16. The optical pick-up apparatus of claim 1, wherein the light source is a laser diode to emit light in a form of an ellipse-shaped far-field pattern and the laser diode is arranged so as to conform a direction of a long axis of the ellipse-shaped far-field pattern with that of the line-shaped light.

17. The optical pick-up apparatus of claim 1, wherein the optical element shapes a width of the light so as to be smaller than that of the concave, the convex or the hole provided on the surface of the detection object.

18. An optical type surface displacement detecting apparatus for optically detecting a concave, a convex or a hole provided on a surface of a detection object, comprising:

an optical pick-up apparatus comprising;

a light source to emit light,
an optical element to irradiate a surface of an detection object with the light emitted from the light source, wherein the surface of the detection object diffusely reflects the light at reflection angles and the reflection angles are changed due to the concave, the convex or the hole provided on the surface of the detection object,
a condenser lens to condense the light diffusely reflected from the surface of the detection object, and
a light receiving element having a light receiving surface and to receive the light condensed by the condenser lens at a receiving position on the light receiving surface, wherein the light receiving position displaces on the light receiving surface due to the concave, the convex or the hole provided on the surface of the detection object; and

a scanning section to relatively shift the light to the detection object;
wherein the optical type surface displacement detecting apparatus detects the concave, the convex or the hole provided on the surface of the detection object from the light receiving position of the light receiving element, and
wherein the optical pick-up apparatus comprises a plurality of light receiving elements or the light receiving element is split into a plurality of light receiving elements.

19. The optical type surface displacement detecting apparatus of claim 18, further comprising:

a pattern recognizing section to recognize a patter on the surface of the detection object from information of the concave, the convex or the hole.

20. The optical type surface displacement detecting apparatus of claim 18, wherein the optical element shapes a width of the light so as to be smaller than that of the concave, the convex or the hole provided on the surface of the detection object.

21. A method of detecting a concave, a convex or a hole provided on a surface of a detection object, comprising steps of:

irradiating the detection object with light emitted from a light source;
condensing the light diffusely reflected from the surface of the detection object by a condenser lens;
receiving the light condensed by the condenser lens at a light receiving position on a light receiving surface of a light receiving element; and
detecting the concave, the convex or the hole provided on the surface of the detection object from the light receiving position on the light receiving surface of the light receiving element.

## FIG. 1

101

103

105

115
115a

111

I

107b    107a    107

MOVING DIRECTION

## FIG. 2

107

MOVING DIRECTION

107b

107a

# FIG. 3

115

|   | 1 | 2 | 3 | 4 | 5 | 6 | 7 | 8 |
|---|---|---|---|---|---|---|---|---|
| A′ | | | | | | | | |
| B′ | | | | | | | | |

# FIG. 4

FF

a

b

101

# FIG. 5

105

FF

FIG. 6

# FIG. 7

```
   115              121              123
 ┌─────────┐    ┌─────────┐    ┌─────────────┐
 │         │    │\        │    │  BINARIZING │
 │   PD    │───▶│  _____│───▶│  CIRCUIT    │
 │         │    │  /      │    │             │
 └─────────┘    └─/───────┘    └─────────────┘
                                      │
                                      ▼
                              125            127
                        ┌──────────────┐  ┌─────────────┐
                        │  CHARACTER   │─▶│  CHARACTER  │
                        │ DISCRIMINATING│  │  PATTERN    │
                        │  CIRCUIT     │◀─│  TABLE      │
                        └──────────────┘  └─────────────┘
```

# FIG. 8

PRIOR ART

# FIG. 9

PRIOR ART

390

190a

G

190

# FIG. 10

PRIOR ART

390

# FIG. 11

107c

107a

# FIG. 12

107

MOVING DIRECTION

107c

A   107a

a

# FIG. 13

# FIG. 14

# FIG. 15

# FIG. 16 (a)

931

# FIG. 16 (b)

PD

935

937

I

91    931

# FIG. 16 (c)

939    941    943    945

PD → BINARIZING CIRCUIT → PATTERN DISCRIMINATING MEANS

PATTERN TABLE

947

# FIG. 17

REFLECTANCE RATIO

# FIG. 18 (a)

955

919

957

961

963

965

BINARIZING
CIRCUIT

959

SP

953
951
91

← I

# FIG. 18 (b)

SP    969    967

→ I

# FIG. 18 (c)

971

SP

→ I

## FIG. 19

9103

E₁

y

α₁ x

9101

LD

POLARIZING
DIRECTION

ELLIPSE-SHAPED
POLARIZED LIGHT

α₂ x

E₂

α₃

x

9105

9107

## FIG. 20

9115  9143

9121

9123

9127

+
−

9119

9125

MOVING DIRECTION

9113
9111
91

MAGNETIZING DIRECTION

# FIG. 21

9141

9143

9145 9147

REPRODUCING SIGNAL

I₀

9133
91

9131

9135

# FIG. 22

9153 9159 9157

9155

9151
91

# FIG. 23

θ

E

INCIDENCE SURFACE

# FIG. 24 ( a )

9163

9165

9167

$I_0$

9161

91

# FIG. 24 ( b )

$\theta$

(PROCEEDING DIRECTION
OF LIGHT IS PERPENDICULAR
TO THE SURFACE OF THIS SHEET)

9161

INCIDENCE POLARIZED LIGHT (E)

# FIG. 25 (a)

9173    9179

9175

9177
9171

91

# FIG. 25 (b) FIG. 25 (c) FIG. 25 (d) FIG. 25 (e)

9181

1
0

9183

9185

9187

# FIG. 26

9173
9179

9177
$\theta$

91

## FIG. 27

## FIG. 28

## FIG. 29